# EUROPÄISCHE PATENTSCHRIFT

(11) **EP 1 682 881 B1**
(45) Veröffentlichungstag und Bekanntmachung des Hinweises auf die Patenterteilung: **24.10.2012**
(21) Anmeldenummer: 04797728.5
(22) Anmeldetag: 09.11.2004
(51) Int. Cl.: B01D 57/02, G01N 27/447

(54) **VERFAHREN ZUR TRENNUNG VON CHEMISCHEN SUBSTANZEN UND/ODER PARTIKELN, VORRICHTUNG UND IHRE VERWENDUNG**
METHOD FOR SEPARATING CHEMICAL SUBSTANCES AND/OR PARTICLES, DEVICE AND USE THEREOF
PROCEDE POUR SEPARER DES SUBSTANCES ET/OU PARTICULES CHIMIQUES, DISPOSITIF ET UTILISATION

(30) Priorität: 14.11.2003 DE 10353406
(43) Veröffentlichungstag der Anmeldung: 26.07.2006
(73) Patentinhaber: Technische Universität Darmstadt, 64289 Darmstadt (DE)
(72) Erfinder: HARDT, Steffen, 64291 Darmstadt (DE)
(74) Vertreter: Mehler Achler
(86) Internationale Anmeldenummer: PCT/EP2004/012650
(87) Internationale Veröffentlichungsnummer: WO 2005/050185

(56) Entgegenhaltungen:
- WO-A-00/22428
- WO-A-03/066191
- DE-C1- 3 742 292
- RAYMOND D E ET AL: "CONTINUOUS SAMPLE PRETREATMENT USING A FREE-FLOW ELECTROPHORESIS DEVICE INTEGRATED ONTO A SILICON CHIP" ANALYTICAL CHEMISTRY, AMERICAN CHEMICAL SOCIETY. COLUMBUS, US, Bd. 66, Nr. 18, 15. September 1994 (1994-09-15), Seiten 2858-2865, XP000478030 ISSN: 0003-2700
- F. HACHEM, B.A.ANDREWS, J.A. ASENJO: "Hydrophobic partitioning of proteins in aqueous two-phase systems" ENZYME AND MICROBIAL TECHNOLOGY, Bd. 19, Nr. 7, 15. November 1996 (1996-11-15), Seiten 507-517, XP002316648 NEW YORK in der Anmeldung erwähnt

## Beschreibung

Die Erfindung betrifft Verfahren zur Trennung von chemischen Substanzen und/oder Partikeln, eine dazu geeignete Vorrichtung sowie deren Verwendung.

Auf dem Gebiet der Analyse von komplexen Mischungen von Biomolekülen, wie z. B. Protein- oder Nukleinsäuren, werden oft Elektrophoreseverfahren angewendet. Besonders bevorzugt sind dabei die Kapillarelektrophorese und die isoelektrische Fokussierung, aber auch die 2D-Gelelektrophorese. In den letzten Jahren sind vor allem Elektrophoresesysteme in Form von Biochips miniaturisiert worden. Dadurch wird erreicht, dass auch mit kleinen Probenmengen gearbeitet werden kann, die Analyse hochgradig automatisiert werden kann und der Elektrophoreseschritt direkt an den Probenpräparationsschritt gekoppelt werden kann. Dies führt zu hohen Durchsatzraten.

In der DE 101 13 257 C1 wird eine Elektrophoresevorrichtung zur Analyse von Proben, zur Isolierung, Reinigung und präparativen Gewinnung von chemischen Substanzen beschrieben, die als miniaturisierter Fertigchip ausgebildet sein kann. Mit Hilfe dieses Chips wird eine zweidimensionale Elektrophorese durchgeführt. Zunächst werden die aufzutrennenden Substanzen isoelektrisch fokussiert. Die vorseparierten Substanzen werden dann in senkrecht zum ersten Trennkanal angeordneten zweiten Trennkanälen mittels Kapillargelelektrophorese getrennt.

Zur Proteintrennung eignen sich auch Zweiphasensysteme. Eine Proteinprobe wird in ein disperses, in der Regel wässriges Zweiphasensystem eingebracht. Je nach ihrer chemischen Affinität verteilen sich die Proteine über die unterschiedlichen Phasen. Die dispergierten Phasen werden dann nach einer gewissen Zeit unter Ausnutzung der unterschiedlichen Dichten der beiden flüssigen Phasen separiert. Diese Methode wird z. B. in F. Hachem et al., "Enzyme and Microbial Technology" 19:507-517,1996 beschrieben.

Gemäß V. G. Gaikar, "J. Chem. Tech. Biotechnol." 1996, 67, Seiten 329-332 werden zur Unterstützung der Trennung der Proteine kationische und anionische oberflächenaktive Zusätze beigegeben. Diese erhöhen die Hydrophobizität der Proteine. Verwendet wurde ein Zweiphasensystem auf der Basis von einerseits Polyethylenglykol und andererseits Natriumsulfatlösung. Das Trennen von Proteinen mit Hilfe von zweiphasigen, wässrigen, oberflächenaktiven Systemen wurde auch in C.-L. Liu et al., "AIChE Jounal", 1995, Vol. 41, No. 4, Seiten 991-995 näher untersucht.

In den V. Reddy et al., "Proceedings of the 7th International Conference on Miniaturized Chemical and Biochemical Analysis Systems", 5.-9. Oktober 2003, Squaw Valley, California USA, Seiten 437-440 wird die organisch-wässrige Flüssigkeitsextraktion auf Phenolbasis für das Reinigen von DNA beschrieben. Damit die einzelnen dort untersuchten Zeilfragmente sich gut in den beiden Fluidphasen verteilen, wird ein Zweiphasenmikrofluidstrom verwendet, der mit Hilfe von elektrodynamischen Instabilitäten die aktive Oberfläche, an der ein Übergang von der einen in die andere Phase stattfinden kann, vergrößert. Die Membran- und Proteinfragmente reichern sich in der organischen Phase an, während die DNA in der wässrigen Phase zurückbleibt.

Zum effizienten Vermischen von Substanzen werden häufig Mikromischer verwendet, wie sie z. B. in T. Herweck et al., "Proceedings of the 5th International Conference on Microreaction Technology, 2001, Seiten 215-229 beschrieben werden. Ihr Funktionsprinzip beruht darauf, dass durch alternierend angeordnete, laminar strömende, sehr dünne Fluidlamellen die Mischung der zu mischenden Substanzen alleine durch Diffusion ermöglicht wird.

In S. Devasenathipathy et al. in "Proceedings of the 7th International Conference on Miniaturized Chemical and Biochemical Analysis Systems, October 5-9, 2003, Squaw Valley, California, USA, Seiten 845-848 werden geladene kolloidale Partikel in einer Lösung mittels elektrokinetischer Prozesse getrennt. In ein T-förmiges Kanalsystem werden zwei Pufferströme mit unterschiedlichen ionischen Leitfähigkeiten eingebracht, die die zu trennenden Partikel enthalten. Indem ein elektrisches Feld angelegt wird, werden die Partikel aus dem Strom mit niedrigerer Leitfähigkeit extrahiert und im Strom mit höherer Leitfähigkeit angereichert.

In C. W. Theos et al., "Applied Biochemistry and Biotechnology", Vol. 54, 1995, Seiten 143-157 wird unter dem Stichwort "Elektroextraktion" durch Anlegen eines elektrischen Feldes an ein wässriges Zweiphasensystem eine elektrophoretische Trennung durch die Phasengrenze hindurch vorgenommen. Mischungen aus zwei Proteinsorten wurden in einer Umgebung zwischen isoelektrischen Punkten getrennt, wobei entgegengesetzt geladene Proteine in getrennten Phasen angereichert wurden. Genauer untersucht wurde der Einfluss des elektrostatischen Potentials auf die Proteintrennung im Bereich der Phasengrenze.

Die WO 00/22428 A beschreibt ein Verfahren zum Messen von physikalischen Eigenschaften vom Compoundproben, indem diese veranlasst werden, sich in zwei Phasen aufzutrennen. Es werden hierzu zwei Fluide eingesetzt, wovon ein Fluid das Compoundmaterial enthält. Beide Fluide sind nicht mischbar, wobei allerdings eine Vermischung im Grenzbereich der beiden Fluide nicht ausgeschlossen wird. Die Diffusion des Compoundmaterials zwischen den Fluidphasen verläuft schneller als die Vermischung. Die Fluide werden unter anderem durch Pumpen oder durch Elektroosmose angetrieben.

Zusätzliche Felder parallel oder senkrecht zur Phasengrenze sind nicht erforderlich, weil der Austausch alleine auf Diffusion beruht.

Die WO 03/066191 A beschreibt ein Verfahren, mit dem kolloidale oder zelluläre Teilchen aus einer Suspension herausgefiltert werden sollen. Hierzu werden zwei Fluide verwendet, die mittels eines Flowgenerators in Strömung versetzt werden. Die Art des Antriebs umfasst mechanische als auch elektrische Antriebe.

Eines der Fluide enthält die abzutrennenden Partikel, die veranlasst werden müssen, über die Phasengrenze hinweg in das zweite Fluid überzuwechseln. Hierbei ist es offensichtlich wichtig, dass die beiden Phasen eine laminare Strömung besitzen, weil dadurch eine Barriere zwischen den Phasen aufgebaut wird, die einen Partikelaustausch verhindern soll.

Diese Barriere kann überschritten werden, wenn beispielsweise ein elektrisches Feld angelegt wird. Die DE 37 42 292 C1 beschreibt ein Verfahren zur Stofftrennung mittels Elektrophorese sowie eine Vorrichtung zur Durchführung des Verfahrens. Es werden zwei nicht mischbare Flüssigkeiten verwendet, so dass sich eine Phasengrenze ausbildet, die sich zwischen den Elektroden befindet. Der Stofftransport erfolgt unter der Wirkung des elektrischen Feldes über mindestens eine Phasengrenze hinweg.

Aufgabe der vorliegenden Erfindung ist es, ein Trennverfahren vorzuschlagen sowie eine dazu geeignete Vorrichtung, bei denen im

Vergleich zu klassischen Elektrophoreseverfahren zusätzliche Trennparameter herangezogen werden.

Gelöst wird diese Aufgabe durch ein Verfahren gemäß Anspruch 1 und durch eine Vorrichtung gemäß Anspruch 4 und deren Verwendung gemäß Anspruch 6.

Das Verfahren ist dadurch gekennzeichnet, dass an mindestens eine Phase ein elektrisches Feld parallel zur Phasengrenze oder parallel und senkrecht zur Phasengrenze zur elektrophoretischen Trennung der chemischen Substanzen und/oder Partikel angelegt wird, und dass in den Phasen unterschiedliche Konzentrationen einer Phasenkomponente eingestellt werden, die eine bestimmte physikochemische Affinität zu den zu trennenden Substanzen und/oder Partikeln hat.

Die Erfindung beruht darauf, durch die Verbindung von elektrophoretischen Methoden und der Trennungsmethode über Zweiphasensysteme chemische Substanzen sowie Partikel nicht nur nach ihrer Masse aufzutrennen, sondern gleichzeitig auch nach anderen Kriterien wie die physikochemische Affinität der chemischen Substanzen oder Partikel zu unterschiedlichen Phasen oder deren Phasengrenzen auszunutzen. Auf diese Weise wird eine mehrdimensionale Trennung und Analyse möglich.

Trennen wird hierbei synonym mit Analysieren, Isolieren, Reinigen und präparativem Gewinnen verwendet.

In einer besonderen Variante werden die speziellen Eigenschaften mikrofluidischer Systeme ausgenutzt: Im Millimeter- bis Submillimeterbereich und kleiner wirken sich die Oberflächenkräfte an Fluidlamellen viel stärker aus als die Volumenkräfte bzw. die Schwerkraft. Dadurch wird erreicht, dass verschiedenste Flüssigkeiten unterschiedlicher Dichte in ein System unterschiedlicher Fluidlamellen zusammengebracht werden können, ohne dass diese entsprechend ihrer Dichte sedimentieren.

Unter Lamellen im Zusammenhang mit dieser Erfindung werden insbesondere schmale, lange Flüssigkeits- und/oder Gelstreifen mit einem vorzugsweise in etwa rechteckigen Querschnitt verstanden, wobei die Lamellen vorzugsweise eine Breite von 1 µm bis 1000 µm und auch in der Höhe ähnliche Abmessungen aufweisen. Die Länge der Lamellen liegt vorzugsweise im mm- bis cm-Bereich.

Die Miniaturisierung durch die Verwendung mikrofluidischer Systeme führt dazu, dass auch kleinste Probenmengen automatisiert mit geringem Zeitaufwand prozessiert werden können. Insbesondere zur Analyse komplexer Mischungen aus Biomolekülen werden Hochdurchsatztechnologien dieser Art benötigt. Ein Beispiel ist die im Moment aktuelle Proteomforschung, in der man den funktionalen Zusammenhang zwischen Erbinformation und dem Proteingehalt der Zelle aufklären möchte. Die Verfahren und die Vorrichtung gemäß der Erfindung erlauben es, sehr viele Analysen in kurzer Zeit durchzuführen und dabei komplexe Gemische aus Proteinen, Nukleinsäuren und Zellfragmenten aufzutrennen und zu analysieren.

Beim Anlegen eines elektrischen Feldes parallel zur Phasengrenze an mindestens einer Lamelle wird durch die elektrophoretische Trennung entlang mindestens einer Lamelle bzw. der Phasengrenzflächen in Kombination mit der Affinität der chemischen Substanzen oder Partikel zu den Phasen und Phasengrenzflächen eine sehr empfindliche, mehrdimensionale Auftrennung erreicht. Selbst Substanzen und Partikel mit sehr ähnlichen Eigenschaften in Bezug auf eine Trennmethode können auf diese Weise separiert werden.

Dieser Trennprozess wird durch Anlegen eines weiteren elektrischen Feldes senkrecht zu der oder den Phasengrenzen gefördert.

Eine besonders gute Effizienz bei der Trennung wird bei der Verwendung eines Mikrofluidsystems mit einer Vielzahl von Lamellen aus zwei oder mehr verschiedenen Phasen erreicht. Durch die Erhöhung der Anzahl der Phasengrenze fällt der Parameter der Durchlässigkeit der Phasengrenzen als Trennungskriterium stärker ins Gewicht. Mit "Phase" wird vornehmlich auf die chemische Zusammensetzung eines Mediums wie Flüssigkeit oder Gel gezielt. So können mehrere Lamellen einer Phase alternierend mit Lamellen einer oder mehrerer anderer Phasen vorliegen. Es können auch Systeme verwendet werden, bei denen von jeder Phase nur jeweils eine Lamelle vorliegt.

Die Trenneffizienz kann auch durch gezielte Wahl unterschiedlichster Phasen und den Zusatz von oberflächenaktiven Substanzen in eine oder mehr Phasen erreicht werden. In einer besonders bevorzugten Ausführungsform werden in den einzelnen Phasen bzw. Lamellen unterschiedliche Konzentrationen einer Substanz eingestellt, um einen Konzentrationsgradienten über das gesamte System einzustellen, der die Selektivität und Effizienz des Trennvorganges erhöht.

Als besonders vorteilhaft hat es sich herausgestellt, als einzelne Phasen parallel zueinander angeordnete Flüssigkeits- oder Gellamellen einer Dicke im Submillimeterbereich und kleiner zu verwenden. Dabei können im Wesentlichen alle bereits aus der klassischen Elektrophorese bekannten Flüssigkeiten oder Gele verwendet werden. Bei der Zusammenstellung einzelner Phasen zu einem System kann auf die Erfahrungen im Bereich der Trennung mittels Zweiphasensystemen zurückgegriffen werden.

Die Vorrichtung ist dadurch gekennzeichnet, dass die Elektroden senkrecht zur Phasengrenze oder parallel und senkrecht zur Phasengrenze angeordnet sind, und dass in den Phasen unterschiedliche Konzentrationen einer Phasenkomponente eingestellt sind, die eine bestimmte physikochemische Affinität zu den zu trennenden Substanzen und/oder Partikeln hat.

Die Vorrichtung weist eine mikrofluidische Kammer und mindestens ein daran angebrachtes Elektrodenpaar zum Anlegen eines elektrische Feldes auf. Die mikrofluidische Kammer ist mit mindestens zwei nicht mischbaren Fluiden oder Gelen in Form von jeweils mindestens einer Lamelle befüllt. Die mindestens zwei Lamellen bilden dabei eine gemeinsame Phasengrenze aus. Bei zwei und mehr Lamellen liegt bzw. liegen eine Phasengrenze weniger als die Anzahl der Lamellen vor. Je nachdem, wie das mikrofluidische System in der mikrofluidischen Kammer eingestellt wird, ist das angelegte elektrische Feld senkrecht oder parallel zu der oder den Phasengrenzen.

Insbesondere in miniaturisierter Ausführungsform kann die Vorrichtung als Biochip bezeichnet werden. Biochips weisen etwa in Scheckkartengröße analytische Systeme auf, die bereits mit den nötigen Fluiden oder Gelen vollständig befüllt sein können. Fertig befüllte Biochips lassen sich direkt in eine Auswerteeinheit einbringen, so dass die Analyse vollständig automatisiert werden kann.

Besonders bevorzugt zur Erhöhung der Selektivität ist es, mindestens zwei Elektrodenpaare vorzusehen, die zwei zueinander senkrechte elektrische Felder generieren.

Je nach Anzahl der Phasen und Fluidlamellen sowie der Tatsache, ob nur an eine Phase oder mehrere, an eine Fluidlamelle oder mehrere ein elektrisches Feld angelegt werden soll, variiert die Gesamtanzahl der Elektrodenpaare.

In einer bevorzugten Ausführungsform wird die Vorrichtung in planarer Geometrie gestaltet. Das heißt, dass Zuführkanäle für jede einzelne Lamelle und die mikrofluidische Kammer in einer Ebene liegen. Die Zuführkanäle entsprechen in ihrer Anordnung der Anordnung der Lamellen im Mikrofluidsystem. Die Zuführkanäle, in denen die einzelnen Flüssig- oder Gelphasen in Form von Lamellen zugeführt werden, stehen mit der mikrofluidischen Kammer in Fließverbindung.

Kammer und Zuführkanäle sind vorzugsweise mit einer Abdeckung versehen.

Um mit Hilfe von Elektroden wirkungsvoll elektrische Felder anlegen zu können, sollte die Vorrichtung im Wesentlichen aus nicht leitendem Material wie Glas, Kunststoff, Keramik bestehen. Die Herstellung aus Glas oder Glaskeramiken ist mit Hilfe von UV-Lithographie zur Herstellung der benötigten Strukturen möglich. Glas oder Glaskeramik hat den Vorteil, gegenüber vielen chemischen Substanzen chemisch inert zu sein und die Trennergebnisse nicht zu verfälschen.

Im Falle einer besonders kostengünstigen Ausführungsform besteht die erfindungsgemäße Vorrichtung im Wesentlichen aus Kunststoff, der vorzugsweise durch Abformverfahren, wie beispielsweise Spritzgießen, Heißprägen oder Spritzprägen, strukturiert werden kann.

Besonders geeignet ist die Vorrichtung zur Trennung von Biomolekülen und/oder -partikeln. Dazu können z. B. Proteine, Nukleinsäuren, DNA, und Zellfragmente gehören.

Die Erfindung soll anhand der folgenden Zeichnungen näher erläutert werden.

Dazu zeigen:
- Fig. 1a, b: eine erste Ausführungsform der erfindungsgemäßen Vorrichtung;
- Fig. 2: eine zweite Ausführungsform der erfindungsgemäßen Vorrichtung;
- Fig. 3: eine dritte Ausführungsform der erfindungsgemäßen Vorrichtung;
- Fig. 4: eine vierte Ausführungsform der erfindungsgemäßen Vorrichtung;
- Fig. 5: eine nicht erfindungsgemäße Ausführungsform der Vorrichtung;
- Fig. 6: eine sechste Ausführungsform der erfindungsgemäßen Vorrichtung und
- Figur 7a, b: eine Ausführungsform als Biochip.

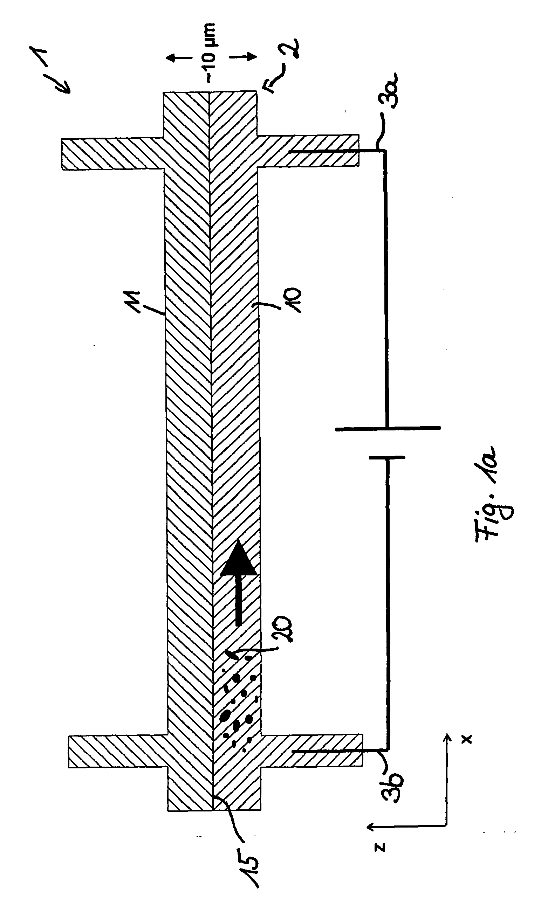

Die in Figur 1a gezeigte Vorrichtung 1 weist ein zweiphasiges Mikrofluidsystem in einer Mikrofluidkammer 2 auf. Die Breite der Mikrofluidkammer 2 beträgt in etwa 10 µm. Bei der einen Phase handelt es sich um eine Extraktionsflüssigkeit 11, bei der anderen Phase handelt es sich um eine Pufferlösung 10. Parallel zur Phasengrenze 15 ist an die Pufferlösung 10 über ein Elektrodenpaar 3a, b eine Gleichspannung angelegt.

In der Pufferlösung 10 sind die zu separierenden Substanzen und Partikel 20 gelöst bzw. suspendiert. Dabei kann es sich um Proteine oder Nukleinsäuren oder auch um subzellulare Fragmente wie Zellkerne, Mitochondrien oder Vesikeln handeln.

Die zwei nichtmischbaren Fluide 10 und 11 weisen in diesem Beispiel keine Strömung auf. Es kann aber von Vorteil sein, die Fluide mittels einer Spritze zu pumpen, um einem eventuellen elektroosmotischen Fluss entgegenzuwirken.

Die Biomoleküle und -partikel 20 werden zunächst in der Pufferlösung 10 wie bei einer normalen Kapillarelektrophorese nach ihrer elektrophoretischen Mobilität getrennt, die von der Ladung und Größe der jeweiligen Moleküle oder Partikel abhängt. Bei dem vorliegenden Beispiel werden die Biopartikel und -moleküle 20 aber auch über ihre unterschiedliche chemische Affinität zur Extraktionsphase 11 und ihre Fähigkeit, die Flüssig-Flüssiggrenzschicht zu durchdringen, getrennt. Dadurch erreicht man eine mehrdimensionale Trennung. Die Trennparameter können über die chemische Zusammensetzung der Extraktionsflüssigkeit 11, den Zusatz oberflächenaktiver Substanzen zur Pufferlösung oder auch durch Anlegen eines elektrischen Feldes senkrecht zur Phasengrenze beeinflusst werden.

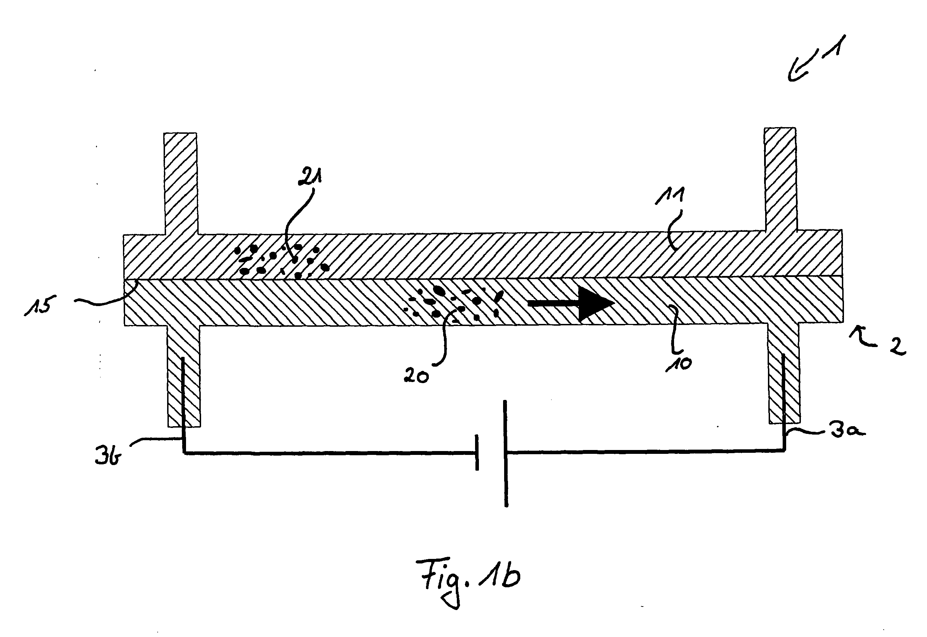

In Figur 1b ist der Zustand dargestellt, in dem sich Biomoleküle 21 von den übrigen Biomolekülen und -partikeln 20 getrennt haben, indem sie aufgrund physikochemischer Affinität zu Phase 11 vermehrt in diese Phase hineindiffundiert sind. Aufgrund der über die Elektroden 3a, b angelegten Spannung sind die übrigen Biomoleküle und -partikel 20 bereits weiter in Richtung Elektrode 3a gewandert.

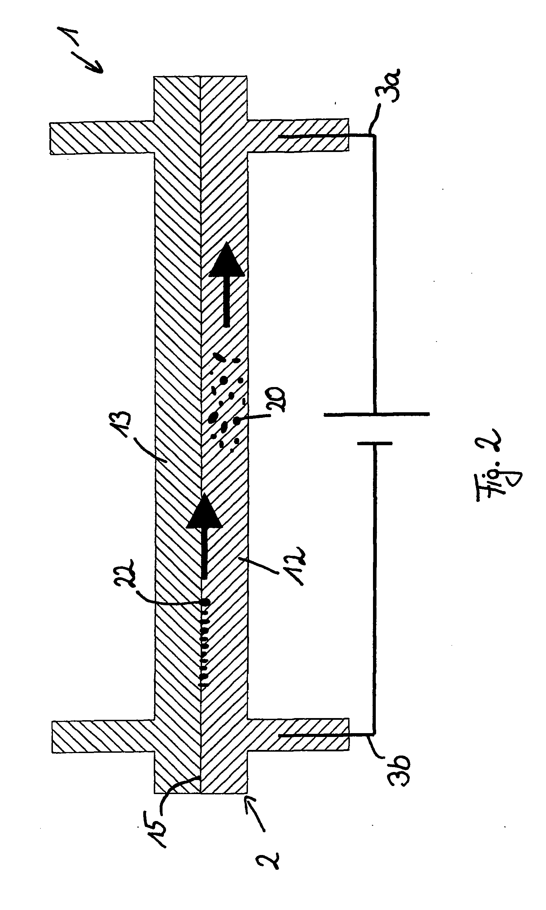

In Figur 2 sind die Phasen 12, 13 so gewählt, dass sich manche Proteine 22 an der Phasengrenze 15 anreichern. Wählt man außerdem die Phasen 12 und 13 derart, dass es sich um eine wässrige und eine nicht wässrige Phase handelt, wird die Mobilität der Proteine 22 über die Verteilung der Hydrophilität bzw. Hydrophobizität über ihre Oberfläche bestimmt. Sie ordnen sich derart an der Phasengrenze 15 an, dass die hydrophoben Teile in die nicht wässrige Phase 13 und die hydrophilen Teile in die wässrige Phase 12 eintauchen. Mit Hilfe des über die Elektroden 3a, b angelegten elektrischen Feldes werden sie elektrophoretisch getrennt. Vollständig hydrophobe Proteine reichem sich in der nicht-wässrigen Phase 13 an, vollständig hydrophile Proteine in der wässrigen Phase 12, wo sie elektrophoretisch getrennt werden.

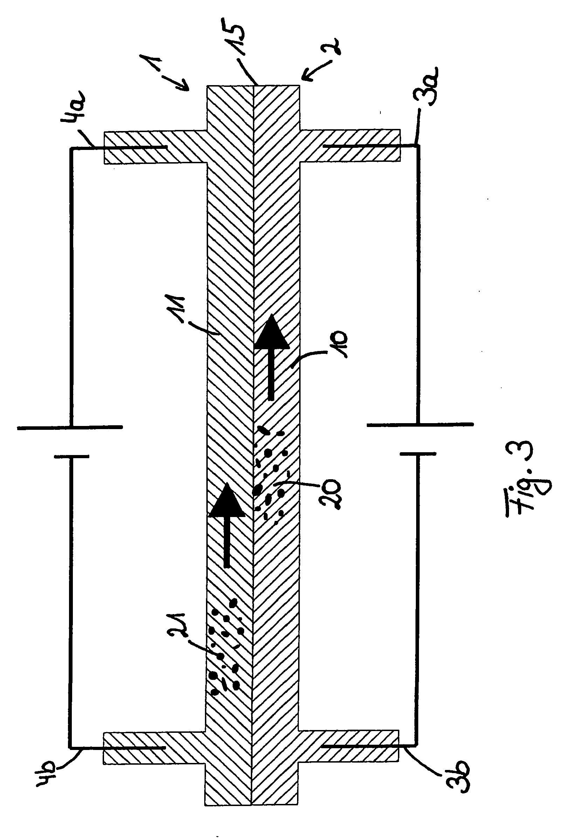

In einer weiteren, in Figur 3 gezeigten Ausführungsform wird wieder ein Zweiphasensystem aus zwei nichtmischbaren wässrigen Lösungen verwendet. Dabei wirken sie als Pufferlösung 11 und als Extraktionslösung. Die über Brownsche Bewegung in die Extraktionsphase 11 hineindiffundierten und dort wegen chemischer Affinität angereicherten Substanzen und Partikel 21 werden mit Hilfe eines zweiten elektrischen Feldes, das über die Elektroden 4a, b ebenfalls parallel zur Phasengrenze 15 angelegt ist, elektrophoretisch getrennt.

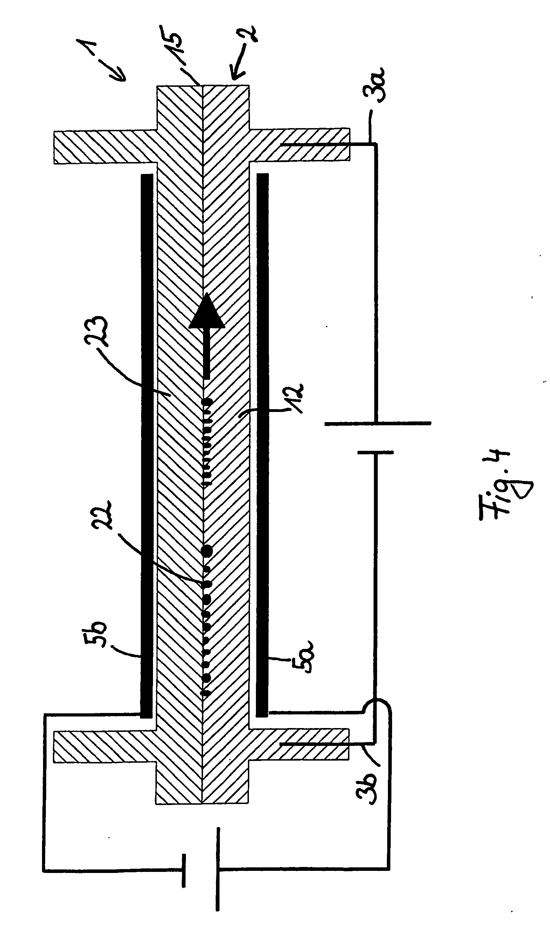

Bei der in Figur 4 dargestellten Vorrichtung 1 wird ein zusätzliches elektrisches Feld über die Elektroden 5a, b senkrecht zur Phasengrenze 15, und zwar fast über die gesamte Länge der Mikrofluidkammer 2 angelegt. Die Phase 12 ist polar und die Phase 13 ist unpolar. Außerdem weisen beide Flüssigkeiten 12, 13 unterschiedliche Viskositäten auf. Das elektrische Feld senkrecht zur Phasengrenze 15 ist so eingestellt, dass alle aufzutrennenden Biomoleküle 22, 23 sich an der Phasengrenze anreichern. Die Biomoleküle 22, 23 richten sich je nach ihrer Hydrophobizität so aus, dass sie mehr in die polare Phase 12 oder die unpolare Phase 13 hineinragen. Wegen der unterschiedlichen Viskositäten und wegen des nur an die polare Phase angelegten elektrischen Feldes parallel zur Phasengrenze, werden die Biomoleküle 22, 23 aufgrund ihrer Oberflächeneigenschaften und nicht so sehr aufgrund ihrer Größe getrennt. Ausschlaggebend sind für die elektrophoretische Mobilität im vorliegendem Fall die Verteilung der Hydrophilität und Hydrophobizität auf der Moleküloberfläche, ihre Ladung, ihr Dipolmoment und ihr ζ-Potential.

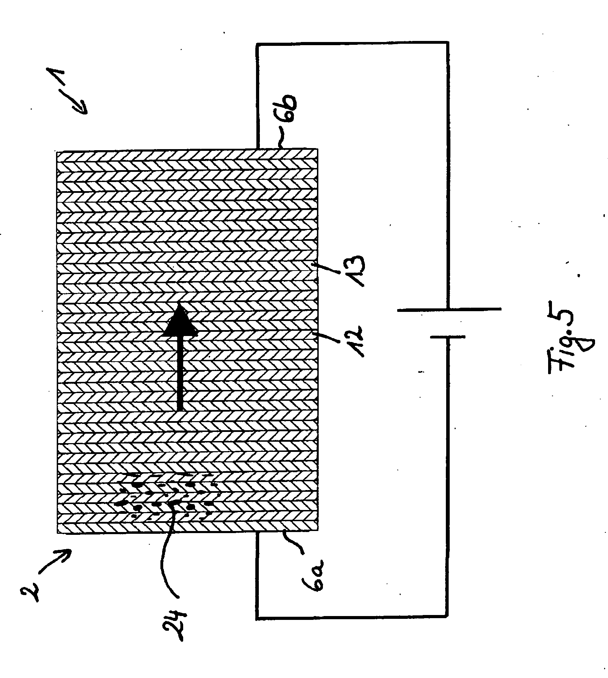

In dem Beispiel entsprechend Figur 5 wird durch die Verwendung eines Multilamellensystems aus zwei nicht vermischbaren Flüssigkeiten 12 und 13 ausgenutzt, dass die elektrophoretische Mobilität nicht nur von der Mobilität in den einzelnen Phasen 12, 13, sondern in hohem Maße auch von der Fähigkeit abhängt, durch die Phasengrenze zu dringen. Zum Herstellen des Multilamellensystems in der Mikrofluidkammer 2 kann nach dem gleichen Prinzip vorgegangen werden wie bei Mikromischern mit dem Unterschied, dass die laminare Strömung in ein strömungsloses System übergeht. Ein eventueller elektroosmotischer Fluss kann durch eine druckgenerierte Gegenströmung kompensiert werden. Zu beachtende Parameter zum Einstellen eines Multilamellensystems sind die Benetzungsfähigkeit der Mikrofluidkammerwände, die Oberflächenkräfte an den Phasengrenzen sowie die Dichte der einzelnen Flüssigkeiten.

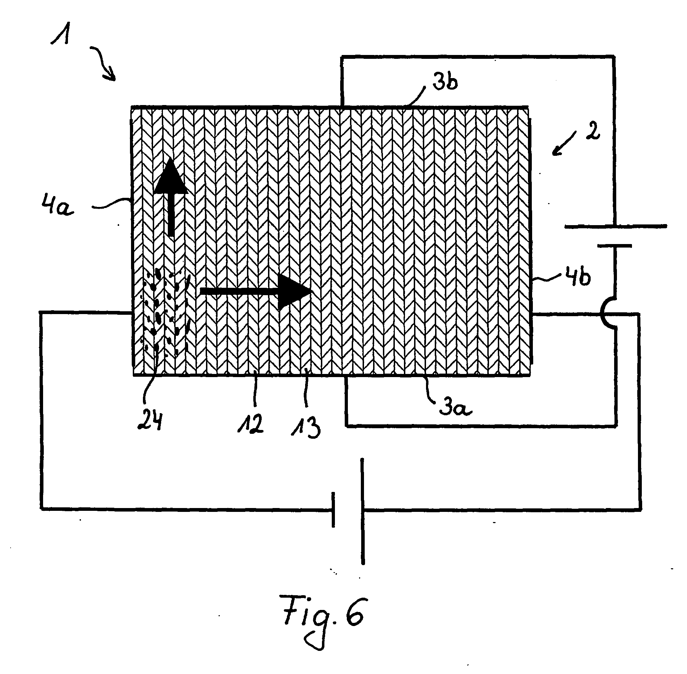

Bei der in Figur 6 dargestellten Ausführungsform liegt ebenfalls eine Mikrofluidkammer 2 mit einem Multilamellensystem vor. Sowohl senkrecht zu den Phasengrenzen zwischen den Phasen 12, 13 als auch parallel zu allen Phasengrenzen sind elektrische Felder angelegt. Parallel zu den Phasengrenzen geschieht dies über die Elektroden 3a, b; senkrecht zu den Phasengrenzen geschieht dies über die Elektroden 4a, b. Je nach Mobilität der zu trennenden Biopartikel und -moleküle 24 in den einzelnen Phasen und an den einzelnen Phasengrenzen werden beide Felder entweder gleichzeitig oder nacheinander angelegt. Indem zunächst das Feld senkrecht zu den Phasengrenzen angelegt wird, werden die zu trennenden Biopartikel und -moleküle 24 über alle Lamellen verteilt, um dann mithilfe des elektrischen Feldes parallel zu den Phasengrenzen in jeder Lamelle für sich klassisch elektrophoretisch getrennt zu werden. Um die Selektivität bei der Trennung senkrecht zu den Phasengrenzen noch zu erhöhen, befindet sich in einer der beiden Phasen eine gelöste Substanz, deren Konzentration in der Richtung senkrecht zu den Lamellen von Lamelle zu Lamelle variiert. Dadurch kann die chemische Affinität der Biomoleküle und -partikel 24 zu den einzelnen Phasen beeinflusst werden.

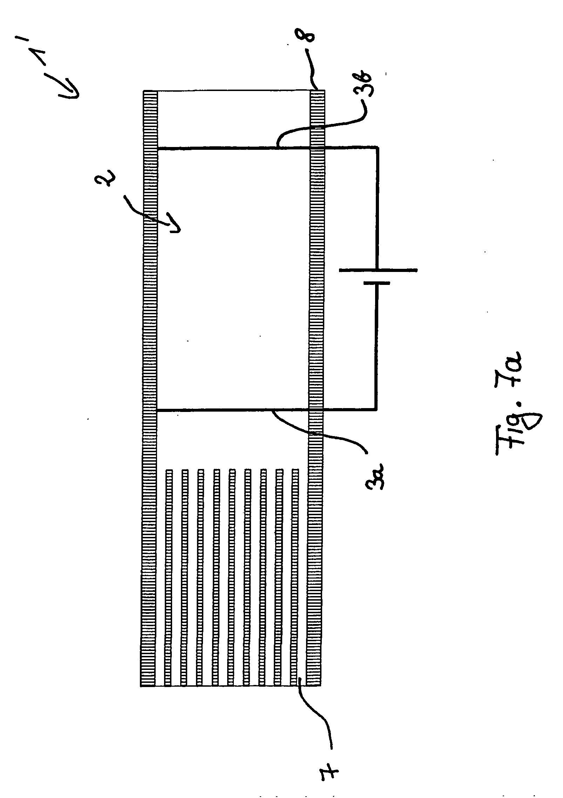

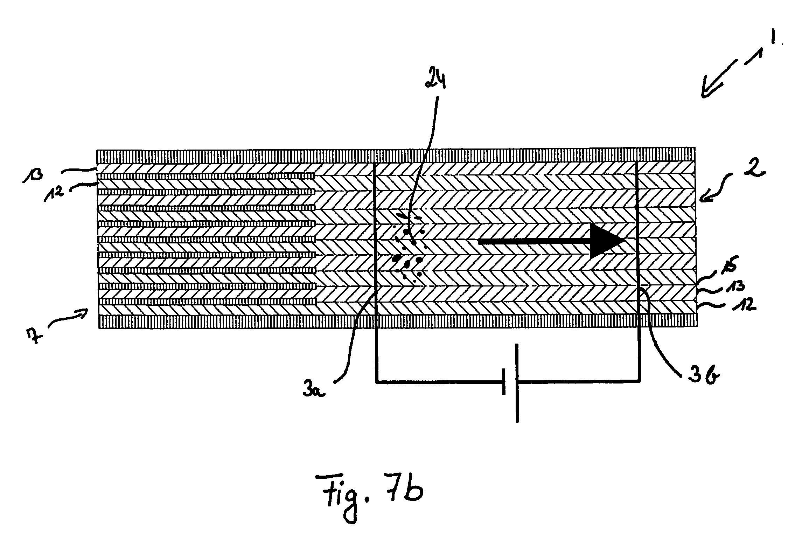

In Figuren 7a, b ist eine Ausführungsform der erfindungsgemäßen Vorrichtung als Biochip 1' dargestellt. Zur Übersicht ist in Figur 8a zunächst ein noch ungefüllter Biochip 1' gezeigt. Er besteht im Wesentlichen aus einer Platte 8, die auch als Substrat bezeichnet werden kann, in die Ausnehmungen hineingearbeitet sind, die zum einen Zuführkanäle 7 und zum anderen die mikrofluidische Kammer 2 bilden. Nicht dargestellt ist eine Abdeckfolie, die Zuführkanäle 7 und Kammer 1 nach oben verschließt. Die Zuführkanäle 7 dienen der Zufuhr der Phasen 12, 13 aus nichtmischbaren Fluiden oder Gelen (Figur 7b). Je nach Anwendung können es auch mehr Phasen sein. Jeder Zuführkanal 7 bildet aus dem jeweiligen Fluid oder Gel eine Lamelle. Beim Austritt aus den Zuführkanälen 7 stoßen die parallel zueinander verlaufenden Lamellen aneinander und bilden gemeinsame Phasengrenzen 15 aus. Im in Figuren 7a, b gezeigten Bespiel ist nur ein Elektrodenpaar 3a, b mit einem elektrischen Feld parallel zu den Lamellen vorgesehen. Die Anzahl und Art der Elektroden wird je nach Anwendung gemäß dem bereits Ausgeführten ausgewählt.

Es sei darauf hingewiesen, dass alle hier vorgestellten Beispiele statt mit Flüssigkeiten auch mit Gelen verwirklicht werden können.

## Patentansprüche

1. Verfahren zur Trennung von chemischen Substanzen und/oder Partikeln in einem Mikrofluidsystem mit zwei oder mehr Phasen, wobei sich in mindestens einer Phase die chemische Substanz oder die Partikel befinden, **dadurch gekennzeichnet, dass** an mindestens eine Phase ein elektrisches Feld parallel zur Phasengrenze oder parallel und senkrecht zur Phasengrenze zur elektrophoretischen Trennung der chemischen Substanzen und/oder Partikel angelegt wird, und
dass in den Phasen unterschiedliche Konzentrationen einer Phasenkomponente eingestellt werden, die eine bestimmte physikochemische Affinität zu den zu trennenden Substanzen und/oder Partikeln hat.

2. Verfahren nach Anspruch 1, **dadurch gekennzeichnet, dass** ein Mikrofluidsystem mit einer Vielzahl von aneinandergrenzenden Lamellen aus zwei oder mehr verschiedenen Phasen verwendet wird und die Lamellen parallel zueinander verlaufen.

3. Verfahren nach einem der Ansprüche 1 oder 2, **dadurch gekennzeichnet, dass** als einzelne Phasen parallel zueinander angeordnete Flüssigkeits- oder Gellamellen einer Dicke im Submillimeterbereich und kleiner verwendet werden.

4. Vorrichtung zum Trennen von chemischen Substanzen und/oder Partikeln mit einer mikrofluidischen Kammer (2) und mindestens einem an der Kammer angebrachten Elektrodenpaar (3a, b; 4a, b; 5a, b; 6a, b), wobei die mikrofluidischen Kammer (2) mit mindestens zwei nicht mischbaren Fluiden (10, 11, 12, 13) oder Gelen in Form von mindestens jeweils einer Lamelle befüllt ist und mindestens zwei Lamellen eine gemeinsame Phasengrenze (15) aufweisen, **dadurch gekennzeichnet, dass** die Elektroden senkrecht zur Phasengrenze oder parallel und senkrecht zur Phasengrenze (15) angeordnet sind, und dass in den Phasen unterschiedliche Konzentrationen einer Phasenkomponente eingestellt sind, die eine bestimmte physikochemische Affinität zu den zu trennenden Substanzen und/oder Partikeln hat.

5. Vorrichtung nach Anspruch 4 mit Ausnehmungen, die Zuführkanäle (7) für die Fluide oder Gele sowie die mikrofluidische Kammer (2) bilden, wobei die Zuführkanäle (7) in die mikrofluidische Kammer (2) münden.

6. Verwendung der Vorrichtung nach einem der Ansprüche 4 oder 5 zur Trennung von Biomolekülen und/oder -partikeln.

## Claims

1. Procedure for the separation of chemical substances and/or particles in a microfluid system with two or more phases, whereby the chemical substance or particles are included in at least one phase, **characterized in that** an electrical field is applied to at least one phase parallel to the phase interface or parallel and perpendicular to the phase interface for the separation of the chemical substances and/or particles by electrophoresis, and
that in the phases different concentrations of a phase component with specific physico-chemical affinity to the substances and/or particles to be separated are adjusted.

2. Procedure according to claim 1, **characterized in that** a microfluid system with a variety of adjacent lamellae of two of more different phases is utilized and that the lamellae are arranged parallel to each other.

3. Procedure according to one of the claims 1 or 2, **characterized in that** as individual phases, fluid or gel lamellae arranged parallel to each other with a thickness in the sub-millimeter range or below are utilized.

4. Device for the separation of chemical substances and/or particles using a microfluid chamber (2) and at least one pair of electrodes (3a, b; 4a, b; 5a, b; 6a, b) mounted to said chamber, whereby the microfluid chamber (2) is filled with at least two immiscible fluids (10, 11, 12, 13) or gels in the form of at least one lamella each and at least two lamellae have a shared phase interface (15), which is **characterized in that** the electrodes are arranged perpendicular to the phase interface (15) or parallel and perpendicular to the phase interface (15), and that in the phases different concentrations of a phase compound with specific physico-chemical affinity to the substances and/or particles to be separated are adjusted.

5. Device according to claim 4 with recesses which form the intake channels (7) for the fluids or gels as well as the microfluid chamber (2), whereby the intake channels (7) lead into the microfluid chamber (2).

6. Utilization of the device according to one of the claims 4 or 5 for the separation of biomolecules and/or bioparticles.

## Revendications

1. Procédé pour la séparation des substances chimiques et/ou des particules dans un système microfluidique avec deux ou plusieurs phases, où se trouvent dans au moins une phase la substance chimique ou les particules, **caractérisé en ce qu'**un champ électrique soit appliqué à au moins une phase en parallèle à la limite de la phase ou en parallèle et à la perpendiculaire à la limite de la phase pour la séparation électrophorétique des substances chimiques et/ou des particules et
**en ce que** différentes concentrations d'un composant de phase, qui a une certaine affinité physico-chimique pour des substances et/ou particules à séparer, soient ajustées dans les phases.

2. Procédé selon la revendication 1, **caractérisé en ce qu'**un système microfluidique est utilisé avec une multitude de lamelles adjacentes de deux ou plusieurs phases distinctes et les lamelles sont parallèles les unes aux autres.

3. Procédé selon l'une des revendications 1 ou 2, **caractérisé en ce que** des lamelles liquides ou de gel d'une épaisseur submillimétrique et plus petite disposées en parallèle les unes aux autres sont utilisées comme des phases individuelles.

4. Dispositif pour séparer des substances chimiques et/ou des particules avec une chambre microfluidique (2) et au moins une paire d'électrodes appropriée à la chambre (3a, b; 4a, b; 5a, b; 6a, b), où la chambre microfluidique (2) est remplie d'au moins deux fluides non-miscibles (10, 11, 12, 13) ou des gels en forme d'au moins une lamelle chacun et au moins deux lamelles comportent une limite de phase (15) commune, **caractérisé en ce que** les électrodes sont disposées à la perpendiculaire à la limite de phase ou en parallèle et à la perpendiculaire à la limite de phase (15), et **en ce que** différentes concentrations d'un composant de phase, qui a une certaine affinité physico-chimique pour des substances et/ou particules à séparer, soient ajustées dans les phases.

5. Dispositif selon la revendication 4 avec des entailles, qui forment des canaux d'alimentation (7) pour les fluides ou les gels ainsi que la chambre microffuidique (2), où les canaux d'alimentation (7) débouchent dans la chambre microfluidique (2).

6. Utilisation du dispositif selon l'une des revendications 4 ou 5 pour la séparation de biomolécules et/ou de bioparticules.
